# EUROPÄISCHE PATENTANMELDUNG

(11) **EP 4 134 274 A1**
(43) Veröffentlichungstag der Anmeldung: **15.02.2023**
(21) Anmeldenummer: 22190042.6
(22) Anmeldetag: 11.08.2022
(51) Int. Cl.: B60P 3/12, B60P 3/077

(54) **HUBBRILLE FÜR FAHRZEUGE**

(30) Priorität: 13.08.2021 DE 102021208912
(71) Anmelder: CXS GmbH, 6414 Mieming (AT)
(72) Erfinder: Soraperra, Josef, 6414 Mieming (AT)
(74) Vertreter: MERH-IP Matias Erny Reichl Hoffmann Patentanwälte PartG mbB

(57) **Zusammenfassung**

Hubbrille 1 für Fahrzeuge, umfassend eine Rahmenstruktur 2 zur Aufnahme eines Fahrzeugrads 12, und eine Grundplatte 4, die an der Rahmenstruktur 2 angebracht ist, wobei die Grundplatte 4 dazu ausgebildet ist, ein zu ihr passendes Gegenstück 5 formschlüssig aufzunehmen.

## Beschreibung

Die vorliegende Erfindung betrifft eine Hubbrille für Fahrzeuge.

### HINTERGRUND DER ERFINDUNG

Im Stand der Technik sind Hubbrillen bekannt. Diese sind zumeist an einem Abschleppfahrzeug angebracht, um ein Fahrzeug (PKW, NFZ oder LKW) abschleppen zu können. Ist das Fahrzeug defekt, muss dieses entweder ganz oder teilweise angehoben abgeschleppt werden. Zu diesem Zweck weisen Hubbrillen für gewöhnlich zwei Radaufnahmen auf, in die die Räder einer Achse des abzuschleppenden Fahrzeugs aufgenommen werden können. Über eine solche Hubbrille, die gewöhnlich am Heck des Abschleppfahrzeuges angebracht ist, können die in den Radaufnahmen aufgenommen Räder des Fahrzeugs angehoben und/oder abgesenkt werden, um das Fahrzeug auf diese Weise in der Hubbrille aufzunehmen und anschließend zumindest teilweise von der Fahrbahn zu heben. Hubbrillen kommen gemäß DE 432 25 03 A1 oder gemäß DE 20 2016 005 739 U1 oft bei der Pannenhilfe oder zur Fahrzeugbergung nach Verkehrsunfällen zum Einsatz. Darüber hinaus offenbart DE 10 2012 100 247 B4 eine Abschleppbrille zum Abschleppen eines Fahrzeugs mit einer Radaufnahme zur Aufnahme eines Rads des abzuschleppenden Fahrzeugs, wobei die Radaufnahme ein drehbar gelagertes Abrollelement aufweist, an dem das Rad des Fahrzeugs zum Einbringen in die Radaufnahme abrollbar ist. DE 4 423 534 A1 offenbart eine Hubvorrichtung, wobei ein vertikal ausgerichteter Zugzylinder an eine Bodenneigung angeordnet ist, um die Hubbrille stufenlos einstellen zu können. Schließlich offenbart die DE 10 2010 016 486 A1 eine Fahrzeug-Abschleppeinrichtung, die eine Sensoranordnung zur Überwachung einer Traganordnungsposition und zur Erzeugung eines Sensorsignals und eine Steuereinrichtung zur Steuerung der Hubeinrichtung der Traganordnung im Fahrbetrieb des Schleppfahrzeugs aufweist.

Die Straßenverkehrs-Zulassungs-Ordnungen (StVO, StVZO, ...) der jeweiligen Länder schreiben vor, dass die zulässige Achslast des Abschleppfahrzeugs während eines Abschleppvorgangs nicht überschritten werden darf. Die zulässige Achslast des Abschleppfahrzeugs wird beim Abschleppen von Nutzfahrzeugen (NFZ) oder Lastkraftwagen (LKW) jedoch sehr schnell erreicht. Um die Vorschriften der jeweiligen Straßenverkehrs-Zulassungs-Ordnung einzuhalten und um einen möglichen Achsbruch während eines Abschleppvorgangs effektiv zu vermeiden, ist es bei hohen Nutzlasten erforderlich die Hinterachse des Abschleppfahrzeugs zu entlasten.

Aufgabe der Erfindung ist es, eine am Heck eines Abschleppfahrzeuges anbringbare Hubbrille vorzusehen, die auf eine einfache und zeitsparende Weise bei einem Abschleppvorgang die Hinterachse des Abschleppfahrzeugs entlasten kann.

### ZUSAMMENFASSUNG DER ERFINDUNG

Gemäß der vorliegenden Erfindung wird zur Lösung der vorstehend genannten Aufgabe eine Hubbrille gemäß Anspruch 1 sowie eine Verwendung der Hubbrille gemäß Anspruch 12 vorgeschlagen. Die abhängigen Ansprüche betreffen bevorzugte Ausführungsbeispiele der Erfindung.

Gemäß einem Aspekt wird eine Hubbrille vorgesehen, die eine Rahmenstruktur zur Aufnahme eines Fahrzeugrads, und eine Grundplatte umfasst. Darüber hinaus ist die Grundplatte an der Rahmenstruktur angebracht und dazu ausgebildet, ein zu ihr passendes Gegenstück formschlüssig aufzunehmen.

Die spezifische Ausbildung der Grundplatte der vorliegenden Erfindung ermöglicht es, eine Hubbrille zu schaffen bzw. vorzusehen, die bedarfsweise ein zu ihr passendes Gegenstück formschlüssig aufnehmen kann, um somit einen genauen, einfachen und zeitsparenden Zusammenbau bei einer gleichzeitig hohen Festigkeit und Betriebssicherheit zu ermöglichen.

In zweckmäßigen bevorzugten Ausführungsbeispielen ist an dem Gegenstück ein Stützrad als Hubbrillenentlastung vorgesehen. Dadurch kann eine gewünschte Entlastung der Hinterachse des Abschleppfahrzeugs während des Abschleppvorgangs erzielt werden. Zudem wird auf diese Weise eine notwendige Bewegungsflexibilität ermöglicht.

In zweckmäßigen bevorzugten Ausführungsbeispielen ist die Grundplatte an einer Stirnseite der Rahmenstruktur angeordnet. Dies ermöglicht eine bessere Zugänglichkeit um das Aufnehmen des passenden Gegenstücks zu vereinfachen.

In zweckmäßigen bevorzugten Ausführungsbeispielen weist die Rahmenstruktur an ihrer rückwärtigen Seite zumindest einen Klappbügel auf. Dieser kann hinter das aufzunehmende Fahrzeugrad geklappt werden um die notwendige Radaufnahme bereitzustellen, sodass das in der Radaufnahme aufgenommene Rad des Fahrzeugs angehoben und/oder abgesenkt werden kann, um das Fahrzeug auf diese Weise zum Abschleppfahrzeug wie gewünscht und erforderlich zu positionieren.

In zweckmäßigen bevorzugten Ausführungsbeispielen ist das Stützrad über eine Welle um eine Hochachse drehbar gelagert. Dies verbessert die Rolleigenschaften des Stützrads, sodass eine hohe Bewegungsflexibilität stets gewährleistet ist.

In zweckmäßigen bevorzugten Ausführungsbeispielen ist ein Gegenstück zur Grundplatte in einer gemeinsamen gemeinsamen Querrichtung verschiebbar ausgebildet, wobei das bspw. als Hohlkörper ausgebildete Gegenstück auf die Grundplatte aufschiebbar ist. Dies ermöglicht, dass die an der Rahmenstruktur angebrachte Grundplatte bedarfsweise ein zu ihr passendes Gegenstück formschlüssig aufnehmen kann, um somit einen genauen, einfachen und betriebssicheren Zusammenbau zu ermöglichen.

In zweckmäßigen bevorzugten Ausführungsbeispielen ist an der Grundplatte eine Anschlagsfläche und an dem Gegenstück eine Gegenanschlagsfläche zur Begrenzung der Bewegung des Gegenstücks ausgebildet ist. Dadurch wird gewährleistet, dass das Gegenstück nicht verkehrt oder fehlerhaft auf die Grundplatte aufgeschoben wird, sodass die Genauigkeit beim Zusammenbau um ein Vielfaches verbessert wird.

In zweckmäßigen bevorzugten Ausführungsbeispielen weist das Gegenstück zumindest eine Bohrung auf, in die im eingeschobenen Zustand wenigstens ein Arretiermittel eingreift, um die Grundplatte und das Gegenstück in Querrichtung zueinander festzulegen, wobei das Arretiermittel bspw. ein Federriegel ist. Über das Arretiermittel wird eine Sicherung bereitgestellt, die schnell und sicher verhindern kann, dass sich im Arretierungszustand das Gegenstück von der Grundplatte löst.

In zweckmäßigen bevorzugten Ausführungsbeispielen steht mit dem Gegenstück zumindest ein Griff in Verbindung. Dies verbessert die Handhabe des Gegenstücks.

In zweckmäßigen bevorzugten Ausführungsbeispielen ist die Rahmenstruktur mittels eines oder mehreren Hydraulikzylindern im Wesentlichen horizontal (vor und zurück) und senkrecht (hoch und runter) verfahrbar. Dies ermöglicht ein vereinfachtes Einbringen des Rads des abzuschleppenden Fahrzeugs in die Radaufnahme der Hubbrille. Dadurch kann bspw. die Bewegung der Hubbrille bspw. aus dem Inneren des Abschleppfahrzeugs heraus oder über eine entsprechende Fernbedienung gesteuert werden.

Gemäß einem weiteren Aspekt wird zudem eine Verwendung der Hubbrille zum Abschleppen von Fahrzeugen vorgeschlagen.

Zusammenfassend ermöglicht es die vorliegende Erfindung eine Hubbrille vorzusehen, die bspw. am Heck eines Abschleppfahrzeuges anbringbar ist, und die auf eine einfache, zeitsparende und betriebssichere Weise ermöglicht bei einem Abschleppvorgang die Hinterachse des Abschleppfahrzeugs zu entlasten.

Weitere Aspekte und deren Vorteile als auch Vorteile und speziellere Ausführungsmöglichkeiten der vorstehend beschriebenen Aspekte und Merkmale werden in den folgenden schematischen Figuren beschrieben. Die Beschreibungen sind jedoch in keinster Weise einschränkend aufzufassen.

### KURZBESCHREIBUNG DER FIGUREN

Fig. 1 zeigt eine beispielhafte Darstellung einer Hubbrille gemäß einem Ausführungsbeispiel der Erfindung von oben;
Fig. 2 zeigt eine beispielhafte Perspektivdarstellung der Grundplatte und des zu ihr passenden Gegenstücks;
Fig. 3 zeigt eine weitere beispielhafte Perspektivdarstellung der Hubbrille gemäß Fig. 1.

### DETAILLIERTE BESCHREIBUNG DER FIGUREN UND BEVORZUGTER AUSFÜHRUNGSBEISPIELE

Im Folgenden werden Beispiele bzw. Ausführungsbeispiele der vorliegenden Erfindung detailliert unter Bezugnahme auf die beigefügten Figuren beschrieben.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

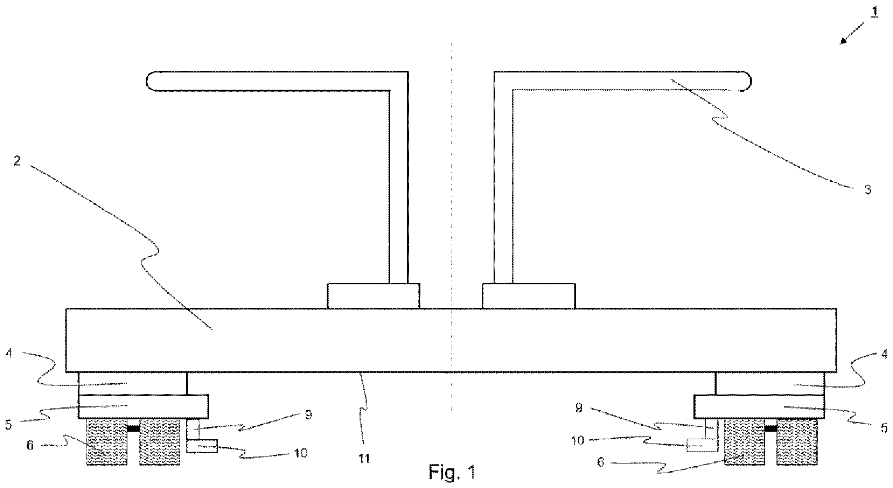

Fig. 1 zeigt eine beispielhafte schematische Darstellung einer Hubbrille 1 gemäß einem Ausführungsbeispiel der Erfindung.

Eine Hubbrille 1 weist eine Rahmenstruktur 2 auf, die z.B. am Heck eines Abschleppfahrzeugs anbringbar ist. Zusätzlich zu den dargestellten Komponenten können an der Hubbrille 1 weitere Bauteile, wie z.B. Hydraulikleitungen und Hydraulikschläuche vorgesehen sein. Gemäß der vorliegenden Erfindung dient die Hubbrille vorrangig zur Aufnahme eines Fahrzeugrads 12.

Die Hubbrille 1 weist zudem an ihrer Rahmenstruktur 2 eine Grundplatte 4 auf, die dazu ausgebildet ist, ein zu ihr passendes Gegenstück 5 formschlüssig aufzunehmen. In diesem Ausführungsbeispiel sind die Grundplatte 4 und das zu ihr passende Gegenstück 5 beispielhaft als einfache rechteckige Bauteile dargestellt. Es ist jedoch möglich, dass die Grundplatte 4 und das Gegenstück auch andere geometrische Grundformen aufweisen können. Sie können z.B. quadratisch oder trapezförmig ausgebildet sein. Die Grundplatte 4 und das Gegenstück 5 können an ihren Kontaktflächen derart ausgebildet sein, dass ein möglichst großflächiger Kontakt hergestellt wird, um eine möglichst gleichmäßige Kraftverteilungder eingeleiteten Kräfte zu ermöglichen. Dies erlaubt eine längere Nutzungsdauer und erhöht die Betriebssicherheit.

In diesem Ausführungsbeispiel ist die Grundplatte 4 an einer Stirnseite 11 der Rahmenstruktur 2 angeordnet. Um beim Abschleppvorgang die Hinterachse des Abschleppfahrzeugs (nicht dargestellt) zu entlasten ist an dem Gegenstück 5 ein Stützrad 6 als Hubbrillenentlastung vorgesehen. Zu Beginn eines jeden Abschleppvorgangs wird regelmäßig - nachdem das in der Hubbrille 1 aufgenommen Fahrzeug angehoben wurde - geprüft, ob die zulässige Achslast des Abschleppfahrzeugs überschritten ist oder nicht. Wird beispielsweise festgestellt, dass die zulässige Achslast des Abschleppfahrzeugs überschritten ist, kann das Gegenstück 5 mitsamt des an ihr vorgesehenen Stützrads 6 auf die Grundplatte geschoben und verriegelt werden, um beim Abschleppvorgang die Hinterachse des Abschleppfahrzeugs zu entlasten. Genauer gesagt wird in diesem Zustand die Achslast vorteilhaft umverteilt, sodass ein Teil der Achslast auch von dem bzw. den Stützrad(rädern) 6 getragen wird. In weiteren Ausführungsbeispielen ist es möglich, das/die Stützrad(räder) 6 über eine Welle um eine Hochachse drehbar zu lagern, sodass die Rolleigenschaften des Stützrads 6 verbessert werden können.

Auf einer rückwärtigen Seite der Rahmenstruktur 2 der Hubbrille 1 ist beispielhaft zumindest ein Klappbügel 3 angeordnet. Der Klappbügel 3 ist dazu eingerichtet, zusammen mit der Rahmenstruktur 2 eine Fassung auszubilden, um ein Fahrzeugrads 12 aufzunehmen und um das Fahrzeugrad 12 im angehobenen Zustand in der Hubbrille 1 zu fixieren.

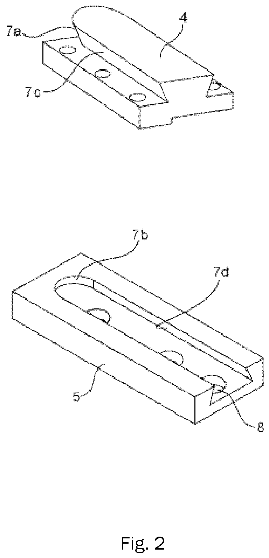

Fig. 2 zeigt eine beispielhafte Perspektivdarstellung der Grundplatte 4 und des zu ihr passenden Gegenstücks 5.

Die Grundplatte 4 und das Gegenstück 5 sind in ihrer gemeinsamen Querrichtung gegeneinander verschiebbar ausgebildet. Zu diesem Zweck kann das Gegenstück 5 als ein Hohlkörper ausgebildet sein, damit es schnell, einfach und praktisch auf die Grundplatte 5 aufgeschoben werden kann.

Damit ein genauer und einfacher Zusammenbau ermöglicht werden kann, ist in Fig. 2 beispielhaft an der Grundplatte 4 eine Anschlagsfläche 7a und an dem Gegenstück 5 eine Gegenanschlagsfläche 7b zur Begrenzung der Bewegung des Gegenstücks gezeigt. Dadurch wird gewährleistet, dass das Gegenstück 5 nicht verkehrt oder fehlerhaft auf die Grundplatte 4 aufgeschoben wird. Weiterhin können Kontaktflächen 7c und 7d derart ausgebildet sein, dass ein möglichst großflächiger Kontakt hergestellen wird, um eine möglichst gleichmäßige Kraftverteilung der eingeleiteten Kräfte zu ermöglichen. Dies erlaubt eine längere Nutzungsdauer und erhöht die Betriebssicherheit. Dies kann bspw. dadurch erfolgen, dass die Kontaktflächen 7c, 7d bzw. die Schiebeflächen in Längsrichtung flach bzw. plan plan ausgebildet sind, um dadurch eine möglich grossflächige und gleichmäßige Kraftverteilung der über das Gegenstück 5 auf die Grundplatte 4 eingeleiteten Kräfte zu ermöglichen.

Die Fig. 2 zeigt weiterhin, dass das Gegenstück 5 zumindest eine Bohrung 8 aufweist. In diese Bohrung 8 greift im eingeschobenen Zustand wenigstens ein Arretiermittel 9 ein, um die Grundplatte 4 und das Gegenstück 5 in Querrichtung zueinander festzulegen. In weiteren Ausführungsbeispielen ist es möglich, dass das Arretiermittel 9 als ein Federriegel ausgebildet ist. Über ein solches Arriertiermittel wird eine Sicherung bereitgestellt, die kostengünstig verhindert, dass sich das Gegenstück 5 von der Grundplatte 4 lösen kann. Im Detail wird durch Drehen des Arriertiermittels ein Raststift (nicht gezeigt) eingezogen, so dass eine Rastkerbe bewirkt, dass das Arriertiermittel fest fixiert wird.

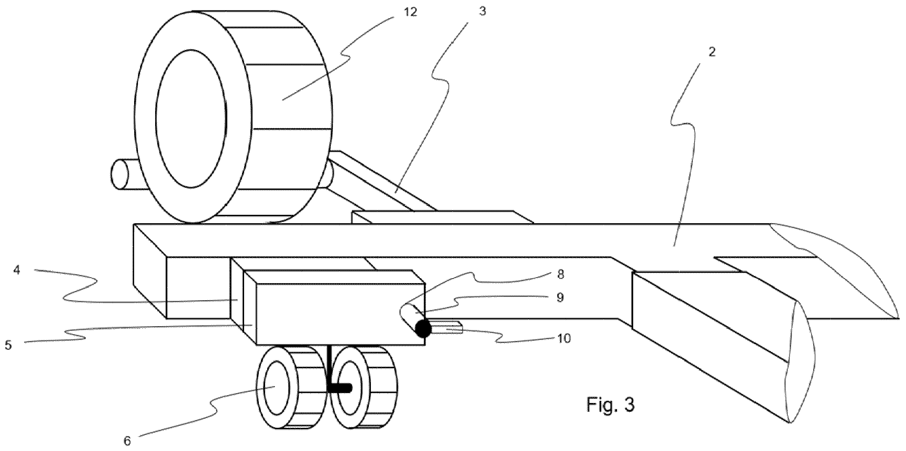

Die Fig. 3 zeigt eine weitere beispielhafte Perspektivdarstellung der Hubbrille 1 gemäß Fig. 1 mit einem Fahrzeugrad 12 eines abzuschleppenden Fahrzeugs.

Fig. 3 zeigt, dass Klappbügel 3 zusammen mit der Rahmenstruktur 2 eine Fassung auszubilden, um das Fahrzeugrads 12 aufzunehmen und um das Fahrzeugrad 12 im angehobenen Zustand in der Hubbrille 1 zu fixieren.

Weiterhin ist zu erkennen, dass die an der Rahmenstruktur 2 angebrachte Grundplatte 4 das zu ihr passende Gegenstück 5 formschlüssig aufgenommen hat und die Grundplatte 4 und das Gegenstück 5 mittels des Arretiermittels 9 in Querrichtung zueinander festzulegt sind.

Schließlich ist auch dargestellt, dass mit dem Gegenstück 5 zumindest ein Griff 10 in Verbindung steht, womit ganz allgemein die Handhabe des Gegenstücks verbessert werden kann.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Zusammenfassend ermöglicht es die vorliegende Erfindung eine sehr vorteilhafte Hubbrille vorzusehen, die bspw. am Heck eines Abschleppfahrzeuges anbringbar ist. Diese Hubbrille ermöglicht auf eine einfache, zeitsparende und betriebssichere Weise bei einem Abschleppvorgang die Hinterachse des Abschleppfahrzeugs zu entlasten. Durch ein einfaches Aufschieben bzw. Einschieben der Stützräder bzw. des Stützrads 6 an die Hubbrille 1 kann ein schnelles, zeitsparendes und sicheres Entlasten der Lastachse des Abschleppfahrzeugs erfolgen.

## Patentansprüche

1. Hubbrille (1) für Fahrzeuge, umfassend:
- eine Rahmenstruktur (2) zur Aufnahme eines Fahrzeugrads (12), und
- eine Grundplatte (4), die an der Rahmenstruktur (2) angebracht ist, wobei die Grundplatte (4) dazu ausgebildet ist, ein zu ihr passendes Gegenstück (5) formschlüssig aufzunehmen.

2. Hubbrille (1) nach Anspruch 1, wobei an dem Gegenstück (5) ein Stützrad (6) als Hubbrillenentlastung vorgesehen ist.

3. Hubbrille (1) nach Anspruch 1 oder 2, wobei die Grundplatte (4) an einer Stirnseite (11) der Rahmenstruktur (2) angeordnet ist.

4. Hubbrille (1) nach zumindest einem der vorangehenden Ansprüche, wobei die Rahmenstruktur (2) an ihrer rückwärtigen Seite zumindest einen Klappbügel (3) aufweist.

5. Hubbrille (1) nach zumindest einem der vorangehenden Ansprüche 2 bis 4, wobei das Stützrad (6) über eine Welle um eine Hochachse drehbar gelagert ist.

6. Hubbrille (1) nach zumindest einem der vorangehenden Ansprüche, wobei die Grundplatte (4) und das Gegenstück (5) in ihrer gemeinsamen Querrichtung gegeneinander verschiebbar ausgebildet sind, wobei das als Hohlkörper ausgebildete Gegenstück (5) auf die Grundplatte (4) aufschiebbar ist.

7. Hubbrille (1) nach zumindest einem der vorangehenden Ansprüche, wobei an der Grundplatte (4) eine Anschlagsfläche (7a) und an dem Gegenstück (5) eine Gegenanschlagsfläche (7b) zur Begrenzung der Bewegung des Gegenstücks (5) ausgebildet ist.

8. Hubbrille (1) nach zumindest einem der vorangehenden Ansprüche, wobei das Gegenstück (5) zumindest eine Bohrung (8) aufweist, in die im eingeschobenen Zustand wenigstens ein Arretiermittel (9) eingreift, um die Grundplatte (4) und das Gegenstück (5) in Querrichtung zueinander festzulegen.

9. Hubbrille (1) nach Anspruch 8, wobei das Arretiermittel (9) ein Federriegel ist.

10. Hubbrille (1) nach zumindest einem der vorangehenden Ansprüche, wobei mit dem Gegenstück (5) zumindest ein Griff (10) in Verbindung steht.

11. Hubbrille (1) nach zumindest einem der vorangehenden Ansprüche, wobei die Rahmenstruktur (2) mittels eines Hydraulikzylinders horizontal (vor und zurück) und senkrecht (hoch und runter) verfahrbar ist.

12. Verwendung einer Hubbrille (1) nach einem der Ansprüche 1 bis 11 zum Abschleppen von Fahrzeugen.
